# EUROPÄISCHE PATENTSCHRIFT

(11) **EP 0 753 718 B1**
(45) Veröffentlichungstag und Bekanntmachung des Hinweises auf die Patenterteilung: **28.02.2001**
(21) Anmeldenummer: 96108990.1
(22) Anmeldetag: 05.06.1996
(51) Int. Cl.: G01B 7/14

(54) **Messverfahren zur sicheren Bestimmung des Abstandes einer leitfähigen Reaktionsschiene von einer sich relativ zur Reaktionsschiene bewegenden Funktionsfläche und hierfür geeigneter Sensor**
Measuring arrangement and sensor for ascertaining the distance of a conductive reaction rail from a functional surface moving relatively thereto
Procédé et appareil pour s'assurer de la distance entre un chemin de réaction conducteur et une surface fonctionnelle en mouvement relatif par rapport à lui

(30) Priorität: 12.07.1995 DE 19525131
(43) Veröffentlichungstag der Anmeldung: 15.01.1997
(73) Patentinhaber: Thyssen Transrapid System GmbH, 34127 Kassel (DE)
(72) Erfinder: Ellmann, Siegfried, Dipl.-Ing., 85609 Aschheim (DE); Klesing, Joachim, Dipl.-Ing., 80992 München (DE); Ruppert, Michael, Dipl.-Ing., 82024 Taufkirchen (DE); Eder, Josef, Dipl.-Ing., 85757 Karlsfeld (DE)
(74) Vertreter: Dahlkamp, Heinrich-Leo, Dipl.-Ing.

(56) Entgegenhaltungen:
- DE-A- 2 803 877
- DE-A- 3 409 448
- DE-A- 3 516 036
- GB-A- 2 267 154
- US-A- 4 603 640
- US-A- 4 611 169
- US-A- 4 953 470
- US-A- 5 170 769

## Beschreibung

Die Erfindung betrifft ein Meßverfahren zur sicheren Bestimmung des Abstandes einer leitfähigen, insbesondere in Richtung der Abstandsbestimmung profilierten Reaktionsschiene von einer sich relativ zur Reaktionsschiene bewegenden Funktionsfläche gemäß Oberbegriff des Anspruchs 1.

Weiterhin bezieht sich die Erfindung auf einen Sensor zur Erfassung von Bewegungsparametern einer den Sensor tragenden Funktionsfläche relativ zu einer vorzugsweise profilierten Reaktionsschiene gemäß Anspruch 5, wobei der Sensor insbesondere für den Einsatz in einem Meßverfahren gemäß Anspruch 1 ausgebildet sein kann.

Derartige Abstandsmeßsysteme sind insbesondere dann von hoher Bedeutung, wenn sich ein Objekt in definiertem Abstand längs eines anderen Objektes mit hoher Geschwindigkeit bewegt, wie beispielsweise eine Magnetschwebebahn relativ zu ihrem Fahrweg.

Aus der DE 34 09 448 C2 ist eine Vorrichtung zur Bestimmung des Abstandes einer elektrisch leitenden Reaktionsschiene von einem ein Spulensystem aufweisenden Sensor bekannt. Das Spulensystem enthält dabei zwei Spulen, die durch in Parallel- oder Reihenschaltung betriebene Kondensatoren gekoppelt und bei entgegengesetztem Wicklungssinn so zueinander angeordnet und miteinander verschaltet sind, daß auch die von beiden Spulen erzeugten oder auf sie einwirkenden elektrischen Felder in der Summe kompensiert werden. Die Vorrichtung ist bei hohen Frequenzen einsetzbar und unempfindlich gegenüber äußeren elektrischen Feldern, Potentialschwankungen oder systembedingten magnetischen Feldern. Demgegenüber erfolgt jedoch keine Prüfung der richtigen Funktion des Sensors während des laufenden Betriebes.

Eine sichere Überwachung der Sensorfunktion ist Gegenstand der in DE 35 16 036 C2 dargestellten Lösung. Hier wird eine Abstandsmeßeinrichtung beschrieben, die mit zwei Spulen - einer Meßspule und einer Referenzspule - arbeitet, die derart geschaltet sind, daß in der Betriebsart "Prüfen" ein vom Abstand unabhängiges Signal von beiden Spulen ausgeht. Bei einer solchen Schaltung bleibt infolge der speziellen Überwachung der Sensorfunktion das Abstandssignal nicht unbeeinflußt.

Der Erfindung liegt die Aufgabe zugrunde, ein Abstandsmeßverfahren gemäß Oberbegriff des Anspruchs 1 und einen Sensor gemäß Oberbegriff des Anspruches 5 dahingehend zu verbessern, daß eine Signifikanzprüfung der Meßgröße diese unbeeinflußt läßt und eine sichere Aussage zum Wahrheitsgehalt der Meßgröße erlaubt.

Die Lösung dieser Aufgabe ist in den Ansprüchen 1 und 5 angegeben. Die Unteransprüche 2 bis 4 und 6 bis 12 enthalten ergänzende Vorschläge und Ausführungsformen dazu.

Bei dem erfindungsgemäßen Verfahren werden in zwei im Sensor angeordneten Signalgebern weitgehend entkoppelte Abstandsinformationen generiert, die in voneinander unabhängigen Abstandsmeßkanälen signaltechnisch aufbereitet und permanent einer Vergleichsschaltung zugeführt werden, die nur dann eine Abstandsinformation liefert, wenn im Ergebnis des Vergleiches innerhalb eines vorwählbaren Toleranzbereiches übereinstimmende Abstandswerte der unabhängigen Meßkanäle vorliegen und zur Abstandsbestimmung dienen zwei Meßspulen, die senkrecht zur Reaktionsschiene hintereinander angeordnet und zueinander derart versetzt sind, daß ihre gegenseitige Beeinflussung minimiert wird.

In vorteilhafter Ausgestaltung der Erfindung ist vorgesehen, die jeweils einem Meßkanal zugeordneten Signalgeber durch Wechselspannungen unterschiedlicher Festfrequenz zu speisen. Die signaltechnische Aufbereitung der Abstandsinformation kann über eine schmalbandige Synchrondemodulation erfolgen, die lediglich den Blindanteil einer Meßspannung für die Abstandsbestimmung erzeugt. Damit werden alle elektrischen und magnetischen Störungen, die nicht in das Nutzsignalband fallen, mit geringem Elektronikaufwand stark bedämpft.

Weiterhin ist es von Vorteil, den Einfluß von Temperatur und Fertigungsstreuung der Schaltungselemente auf die Meßspannung durch ein typenspezifisches Kennfeld zu kompensieren.

Der erfindungsgemäße Sensor weist zwei der Abstandsbestimmung dienende Meßspulen auf, die senkrecht zur Reaktionsschiene hintereinander angeordnet und zueinander derart versetzt sind, daß ihre gegenseitige Beeinflussung minimiert wird. Darüber hinaus ist vorgesehen, daß die Meßspulen im wesentlichen längs zur Profilierung verlaufende, erste Leiterbahnabschnitte und desweiteren im wesentlichen quer zur Profilierung verlaufende, zweite Leiterbahnabschnitte aufweisen, wobei die ersten und zweiten Leiterbahnabschnitte nicht in einer gemeinsamen Ebene liegen, so daß ein Höhenversatz zwischen den ersten und zweiten Leiterbahnabschnitten senkrecht zur Reaktionsschiene gegeben ist.

Zur Minimierung des Einflusses der Profilierung der Reaktionsschiene auf die Abstandsbestimmung befinden sich die im wesentlichen quer zur Profilierung verlaufenden, zweiten Leiterbahnabschnitte zwischen der Reaktionsschiene und den im wesentlichen längs zur Profilierung verlaufenden, ersten Leiterbahnabschnitten. Vorzugsweise liegen dabei die zweiten Leiterbahnabschnitte einerseits und die jeweiligen ersten Leiterbahnabschnitte mit den Verbindungsleitern andererseits in Ebenen, die zueinander abgewinkelt sind.

Als vorteilhaft im Hinblick auf eine weitere Reduzierung der Rückwirkung der Profilierung der Reaktionsschiene auf das Abstandssignal hat sich erwiesen, die quer zur Profilierung verlaufenden zweiten Leiterbahnabschnitte bei periodischem Änderungsverlauf des Profils der Reaktionsschiene über eine solche Periode zu erstrecken.

Kommen für eine sichere Abstandsbestimmung zwei Meßspulen zum Einsatz, können diese zur Minimierung ihrer gegenseitigen Beeinflussung senkrecht zur Reaktionsschiene hintereinander angeordnet und zueinander versetzt sein. Dabei ist ein Versatz der Meßspulen um ca. ein Viertel ihrer Länge besonders vorteilhaft.

Soll der Sensor neben der Bestimmung des Abstandes auch für eine Geschwindigkeitsmessung geeignet sein, so ist in diesem eine Meßspule zur Bestimmung der Geschwindigkeit der Funktionsfläche relativ zur Reaktionsschiene in zweckmäßiger Ausführung auf der der Reaktionsschiene abgewandten Seite der Abstandsmeßspule(n) angeordnet.

Um eine hohe Empfindlichkeit hinsichtlich der Profiländerung der profilierten Reaktionsschiene zu erreichen, ist die Meßspule zur Bestimmung der Geschwindigkeit in zwei Teilspulen unterteilt, so daß die Frequenz des bei Überfahrt entstehenden Pulsmusters ein Maß für die Geschwindigkeit darstellt.

Die Erfindung soll nachfolgend im Rahmen von das Meßverfahren und den Sensor betreffenden Ausführungsbeispielen anhand von Zeichnungen näher erläutert werden.

Es zeigen:
- Fig. 1: eine Schaltung zur Durchführung des Meßverfahrens als Blockschaltbild,
- Fig. 2: eine schematische Darstellung eines Sensors mit seitlich versetzter Einbauumgebung an einem Magnetschwebefahrzeug,
- Fig. 3: eine Explosionsdarstellung eines Sensors gemäß Fig. 2,
- Fig. 4: eine Darstellung des Sensors gemäß Fig. 3 mit Geschwindigkeitsmeßspule.

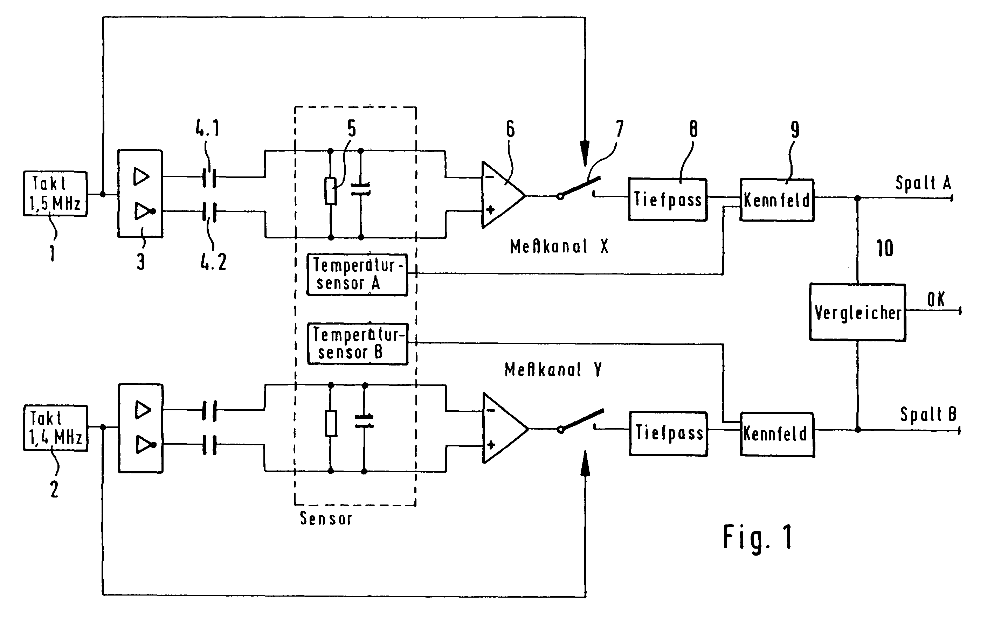

In Durchführung des Meßverfahrens zur sicheren Bestimmung des Abstandes der Reaktionsschiene von der den Sensor tragenden Funktionsfläche kann eine Schaltung gemäß Fig. 1 Verwendung finden. Nach dieser Schaltung erzeugen die Taktgeneratoren 1, 2 Wechselspannungen unterschiedlicher Festfrequenz von 1,4 bzw. 1,5 MHz, wobei die Taktgeneratoren 1, 2 jeweils unabhängigen, im Aufbau übereinstimmenden Meßkanälen X, Y zugeordnet sind. Nachfolgend wird der Schaltungsaufbau eines Meßkanals dargestellt. Der Grundtakt von 1,4 bzw. 1,5 MHz wird von einer Gegentakttreiberstufe 3 in zwei unipolare, gegenphasige Signale umgesetzt. Nach der Abtrennung des Gleichanteils der Wechselspannung durch zwei Koppelkapazitäten 4.1, 4.2 wird mit diesen Signalen der die Meßspule 5 enthaltende LC-Resonanzmeßkreis des Sensors symmetrisch angesteuert. Der Abgriff des abstandsabhängig auf der Grundlage der Wechselwirkung mit der Reaktionsschiene modulierten Ausgangssignals erfolgt ebenfalls symmetrisch.

Am Eingang der nachfolgenden elektronischen Auswertung der Abstandsinformation werden die gegenphasigen Signale in einem Differenzverstärker 6 voneinander substrahiert. Hierdurch können externe Störungen, die in beiden Signalen gleichsinnige Änderungen hervorrufen, wirksam unterdrückt werden.

Die der Differenzverstärkung nachfolgende Synchrondemodulation erfolgt über einen Schalter 7 und einen Tiefpaß 8, wonach der gebildete Blindanteil der Meßspannung in digitaler Form an den Eingang eines typenspezifischen Kennfeld-Eproms 9 gelegt wird. Die zweite Eingangsgröße des Kennfeld-Eproms 9 bildet die Temperatur an der Meßspule 5, die von einem im Sensor in unmittelbaren Nähe der jeweiligen Meßspule 5 befindlichen Temperaturgeber A oder B geliefert wird. Im Kennfeld-Eprom 9 sind die Abbildungskennlinien vom gemessenen Blindanteil auf den real vorhandenen mechanischen Spalt als Funktion der Temperatur an der Meßspule 5 abgelegt.

Anschließend werden die in beiden unabhängigen Meßkanälen gebildeten Spaltsignale in einer in fail-safe-Technik ausgeführten Vergleichsschaltung 10 zusammengeführt und auf Übereinstimmung geprüft, wobei das Ausgangssignal der Vergleichsschaltung 10 nur dann aktiviert wird, wenn die Meßkanäle einen übereinstimmenden Wert aufweisen.

Infolge der vollständig unabhängigen Signalwege und der permanenten Verfügbarkeit der Signale der Meßkanäle unter Einschluß der Möglichkeit des ständigen Vergleiches der Signale auf Übereinstimmung ist eine sichere Abstandsbestimmung zu jedem Zeitpunkt ohne Beeinflussung des Abstandsignals bei der Signifikanzprüfung möglich.

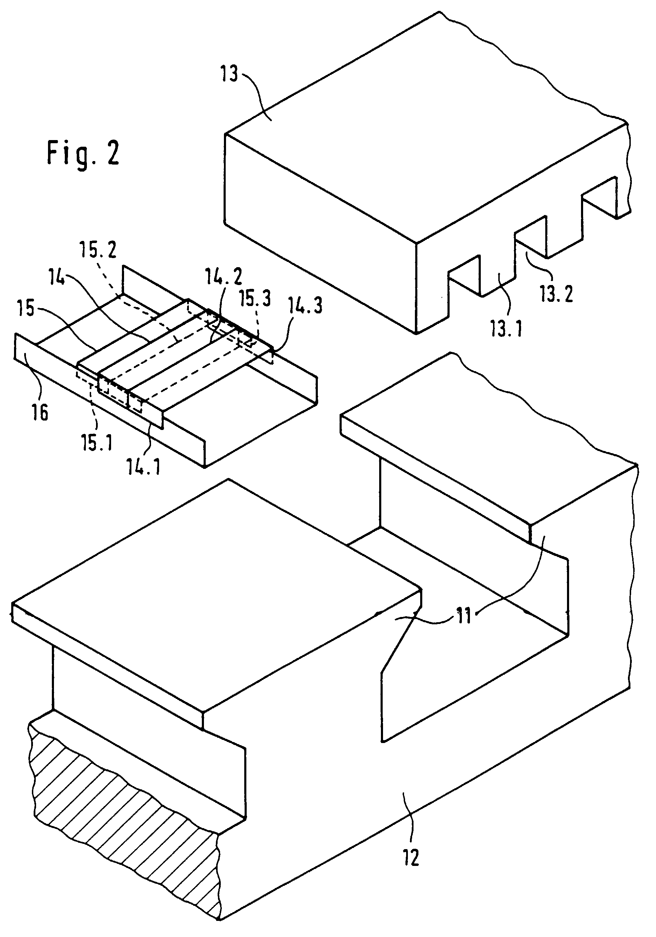

Ein für den Einbau in ein Magnetschwebefahrzeug konzipierter Sensor ist in Fig. 2 mit Einbauumgebung dargestellt. Er wird zwischen zwei Hochkerne 11 des Tragmagneten 12 des Magnetschwebefahrzeuges eingebaut und liefert Abstandsinformationen zu dem am Fahrweg der Magnetschwebebahn angeordneten Statorpaket 13, also eine Information über die Größe des Spaltes zwischen Tragmagnet 12 und Statorpaket 13. Das Statorpaket 13 ist in Form von Zähnen 13.1 und Nuten 13.2 profiliert.

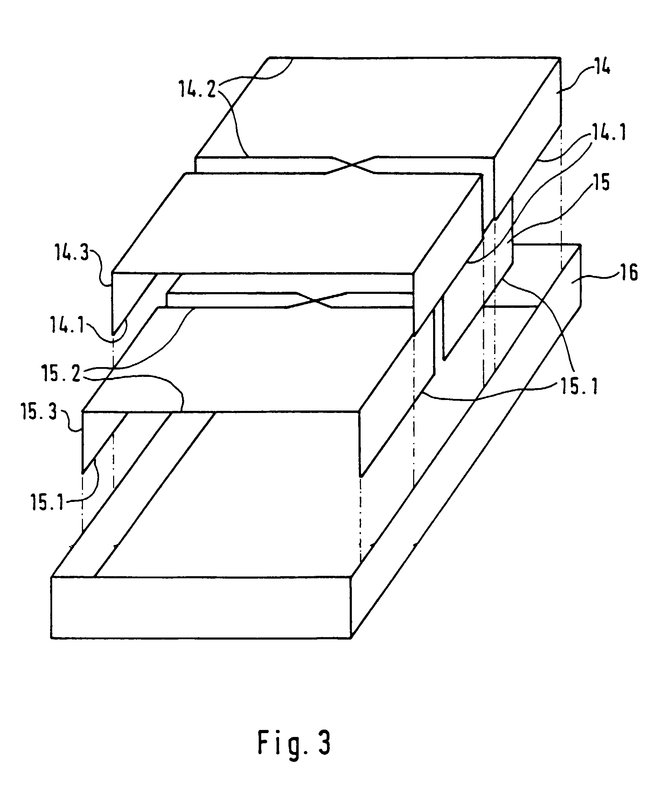

Wie aus der Explosionsdarstellung des Sensors gemäß Fig. 3 erkennbar, enthält dieser zwei im Aufbau übereinstimmende Spaltmeßspulen 14, 15, die in einem der Abschirmung von umgebenden magnetischen Störfeldern dienenden Gehäuse 16 angeordnet sind (Fig. 2).

Die Spaltmeßspulen 14, 15 weisen im wesentlichen längs zur Profilierung verlaufende, erste Leiterbahnabschnitte 14.1, 15.1 und im wesentlich quer zur Profilierung verlaufende, zweite Leiterbahnabschnitte 14.2, 15.2 auf. Dabei liegen die zweiten Leiterbahnabschnitte einerseits und die jeweiligen ersten Leiterbahnabschnitte mit den Verbindungsleitern 14.3, 15.3 andererseits in Ebenen, die zueinander abgewinkelt sind. Desweiteren erstrecken sich die Spaltmeßspulen 14, 15 über die Breite einer vollständigen Zahn-Nut-Periode eines Statorpaketes 13. Durch eine derartige Anordnung wird die Rückwirkung der Zahn-Nut-Geometrie des aus Statorpaketen 13 gebildeten Langstators auf das Meßsignal minimiert.

Die Geometrie der Leiterbahnen der Spaltmeßspulen 14, 15 ist in Form einer "8" ausgeführt. Dadurch wird die Meßspule in zwei Teilflächen mit unterschiedlichem Wicklungssinn unterteilt, womit Rückwirkungen von magnetischen Störfeldern auf das Meßsignal unterdrückt werden.

Die Spaltmeßspulen 14, 15 sind senkrecht zum Statorpaket 13 hintereinander angeordnet und längs zur Zahn-Nut-Profilierung um ein Viertel ihrer Länge versetzt. Ein solcher Sensor liefert, ausgehend von den Spaltmeßspulen 14, 15, entkoppelte Abstandsinformationen, die über die beschriebene Schaltung unabhängig signaltechnisch verarbeitet und einem Vergleich zugeführt werden können.

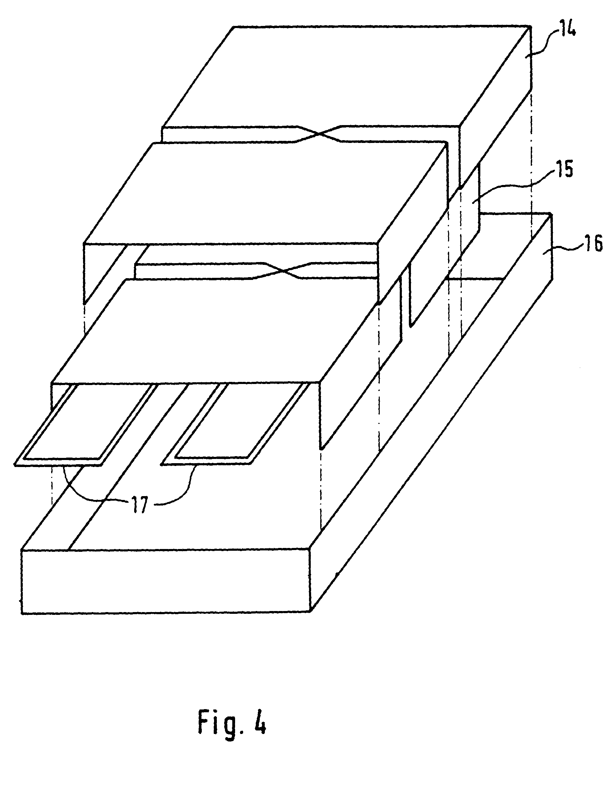

Der Sensor kann desweiteren eine aus zwei Teilspulen aufgebaute Geschwindigkeitsmeßspule 17 enthalten, die sich auf der dem Langstator abgewandten Seite der Spaltmeßspulen 14, 15 befindet (Fig.4). Die Teilspulen sind in ihrer Anordnung derart auf die Zahn-Nut-Geometrie des Langstators abgestimmt, daß eine hohe Empfindlichkeit hinsichtlich der Profiländerung erreicht wird, womit ein Pulsmuster erzeugbar ist, das der Zahn-Nut-Geometrie des Langstators entspricht und dessen Frequenz sich proportional zur Geschwindigkeit des in Längsrichtung des Langstators bewegten Sensors verhält.

## Patentansprüche

1. Meßverfahren zur sicheren Bestimmung des Abstandes einer leitfähigen, insbesondere in Richtung der Abstandsbestimmung profilierten Reaktionsschiene (13) von einer sich relativ zur Reaktionsschiene bewegenden Funktionsfläche (12), bei dem die Funktionsfläche einen Sensor trägt, in welchem ein Wechselfeld erzeugt wird, das abstandsabhängig einer Veränderung unterliegt, die in einem im Sensor befindlichen Signalgeber als Abstandsinformation erfaßt wird, vorzugsweise zur Bestimmung des Abstandes eines Magnetschwebefahrzeuges vom Fahrweg desselben, **dadurch gekennzeichnet**, daß in zwei im Sensor angeordneten Signalgebern weitgehend entkoppelte Abstandsinformationen generiert werden, die in voneinander unabhängigen Abstandsmeßkanälen signaltechnisch aufbereitet und permanent einer Vergleichsschaltung (10) zugeführt werden, die nur dann eine Abstandsinformation liefert, wenn im Ergebnis des Vergleiches innerhalb eines vorwählbaren Toleranzbereiches übereinstimmende Abstandsmeßwerte der unabhängigen Meßkanäle vorliegen und daß zur Abstandsbestimmung zwei Meßspulen (14, 15) dienen, die senkrecht zur Reaktionsschiene (13) hintereinander angeordnet und zueinander derart versetzt sind, daß ihre gegenseitige Beeinflussung minimiert wird.

2. Meßverfahren nach Anspruch 1, **dadurch gekennzeichnet**, daß die jeweils einem Meßkanal zugeordneten Signalgeber durch Wechselspannungen unterschiedlicher Festfrequenz gespeist werden.

3. Meßverfahren nach Anspruch 1 oder 2, **dadurch gekennzeichnet**, daß die signaltechnische Aufbereitung der Abstandsinformation über eine schmalbandige Synchrondemodulation erfolgt, die lediglich den Blindanteil einer Meßspannung für die Abstandsbestimmung erzeugt.

4. Meßverfahren nach Anspruch 1, 2 oder 3, **dadurch gekennzeichnet**, daß der Einfluß von Temperatur und Fertigungsstreuung der Schaltungselemente auf die Meßspannung durch ein typenspezifisches Kennfeld kompensiert wird.

5. Sensor zur Erfassung von Bewegungsparametern einer den Sensor tragenden Funktionsfläche relativ zu einer profilierten Reaktionsschiene, mit einer der Abstandsbestimmung zur Reaktionsschiene (13) dienenden Meßspule (14, 15), die von einem Wechselspannungsgenerator gespeist wird, in der hierdurch ein Wechselfeld erzeugt wird, welches durch die Reaktionsschiene (13) in Abhängigkeit vom Abstand zu dieser verändert wird, **dadurch gekennzeichnet**, daß der Sensor zwei der Abstandsbestimmung dienende Meßspulen (14, 15) aufweist, die senkrecht zur Reaktionsschiene (13) hintereinander angeordnet und zueinander derart versetzt sind, daß ihre gegenseitige Beeinflussung minimiert wird und daß die der Abstandsbestimmung dienenden Meßspulen (14, 15) im wesentlichen längs zur Profilierung (13.1, 13.2) verlaufende, erste Leiterbahnabschnitte (14.1, 15,1) und desweiteren im wesentlichen quer zur Profilierung (13.1, 13.2) verlaufende, zweite Leiterbahnabschnitte (14.2, 15.2) aufweisen, wobei die ersten und zweiten Leiterbahnabschnitte nicht in einer gemeinsamen Ebene liegen, so daß ein Höhenversatz zwischen den ersten und zweiten Leiterbahnabschnitten senkrecht zur Reaktionsschiene (3) gegeben ist.

6. Sensor nach Anspruch 5, **dadurch gekennzeichnet**, daß sich die im wesentlichen quer zur Profilierung (13.1, 13.2) verlaufenden, zweiten Leiterbahnabschnitte (14.2, 15.2) zwischen der Reaktionsschiene (13) und den im wesentlichen längs zur Profilierung (13.1, 13.2) verlaufenden, ersten Leiterbahnabschnitten (14.1, 15.1) befinden.

7. Sensor nach Anspruch 5 oder 6, **dadurch gekennzeichnet**, daß die zweiten Leiterbahnabschnitte (14.2, 15.2) einerseits und die jeweiligen ersten Leiterbahnabschnitte (14.1, 15.1) mit den Verbindungsleitern (14.3, 15.3) andererseits in Ebenen liegen, die zueinander abgewinkelt sind.

8. Sensor nach Anspruch 5, 6 oder 7, **dadurch gekennzeichnet**, daß sich die quer zur Profilierung (13.1, 13.2) verlaufenden, zweiten Leiterbahnabschnitte (14.2, 15.2) bei periodischem Änderungsverlauf des Profils der Reaktionsschiene (13) über eine solche Periode erstrecken.

9. Sensor nach Anspruch 5, **dadurch gekennzeichnet**, daß die Meßspulen (14, 15) geometrisch um ca. ein Viertel ihrer Länge versetzt sind.

10. Sensor nach einem der vorgenannten Ansprüche, **dadurch gekennzeichnet**, daß in diesem eine Meßspule (17) zur Bestimmung der Geschwindigkeit der Funktionsfläche (12) relativ zur Reaktionsschiene (13) angeordnet ist.

11. Sensor nach Anspruch 10, **dadurch gekennzeichnet**, daß sich die Meßspule (17) zur Bestimmung der Geschwindigkeit auf der der Reaktionsschiene (13) abgewandten Seite der Abstandsmeßspule(n) (14, 15) befindet.

12. Sensor nach Anspruch 10 und 11, **dadurch gekennzeichnet**, daß die Meßspule (17) zur Bestimmung der Geschwindigkeit in zwei Teilspulen derart unterteilt ist, daß eine hohe Empfindlichkeit hinsichtlich der Profiländerung der profilierten Reaktionsschiene ( 13) erreicht wird.

## Claims

1. A method for reliably measuring a distance between a conducting reaction track (13) having profilings extending especially in the direction of the distance determination and a functional surface (12) moving relative to the reaction track wherein the functional surface supports a sensor in which an alternating field is generated that is subject to changes according to distance determined by a signal transmitter allocated in the sensor, preferably for determining the distance between a magnetic vehicle and its travelling path, **wherein** in each of said two signal transmitters allocated in the sensor substantially decoupled distance information values are generated which are processed in independent distance measuring channels constantly feeding the processed signals to a comparator (10) emitting distance information values only when the processed signals of the separate distance measuring channels are identical within a predetermined tolerance range and wherein two measuring coils (14, 15) serve for determining the distance, said coils being positioned perpendicular to the reaction track (13) one after another and staggered relative to one another such that interference between said two measuring coils is minimized.

2. A method according to claim 1, **wherein** the signal transmitters allocated to a measuring channel are supplied with alternating current of a different preset frequency.

3. A method according to claim 1 or 2, **wherein** said step of processing the distance value includes employing a narrowband synchronous demodulation for generating only a wattless component of a measuring voltage for measuring the distance.

4. A method according to claim 1, 2 or 3, **wherein** temperature effects and manufacturing tolerance effects of circuit elements on a measuring voltage are compensated with the aid of circuit-specific performance characteristics.

5. A sensor for detecting movement parameters of a functional surface bearing said sensor connected relative to a reaction track having profilings, said sensor comprising a measuring coil (14, 15) for detecting a distance to the reaction track (13) supplied by an alternating current generator, producing an alternating field in said measuring coil wherein the alternating field changes as a function of the distance to the reaction track (13), **wherein** the sensor comprises two distance measuring coils (14, 15) positioned perpendicular to the reaction track (13) one after another and staggered relative to one another such that interference between said two measuring coils is minimized and wherein the distance measuring coils (14, 15) comprise first strip conductor sections (14.1,15.1) extending substantially parallel to the profilings (13.1, 13.2) and furthermore second strip conductor sections (14.2, 15.2) which extend substantially transverse to the profilings (13.1, 13.2) whereby the first and second strip conductor sections are not positioned in a common plane so that an offset between the first and second strip conductor sections perpendicular to the reaction track (13) is provided.

6. A sensor according to claim 5, **wherein** said second strip conductor sections (14.2, 15.2) extending substantially transverse to profilings (13.1,13.2) are positioned between the reaction track (13) and the first strip conductor sections (14.1, 15.1) extending substantially parallel to the profilings (13.1, 13.2).

7. A sensor according to claim 5 or 6, **wherein** said second strip conductor sections (14.2, 15.2) and the respective first strip conductor sections (14.1, 15.1) together with the connecting conductors (14.3, 15.3) are positioned in planes angled to each other.

8. A sensor according to claim 5, 6 or 7, **wherein** the second strip conductor sections (14.2, 15.2) extending transverse to the profilings (13.1,13.2) cover a length that corresponds to the periodic repeating sections of the profiling of the reaction track (13).

9. A sensor according to claim 5, **wherein** said measuring coils (14, 15) are staggered by one fourth of their length.

10. A sensor according to one of the preceding claims, **wherein** said sensor comprises a detecting coil (17) for determining the velocity of the functional surface (12) relative to the reaction track (13).

11. A sensor according to claim 10, **wherein** the detecting coil (17) for determining the velocity is positioned at a side of said measuring coil(s) (14,15) facing away from the reaction track (13).

12. A sensor according to claim 10 and 11, **wherein** said detecting coil (17) for determining the velocity is divided into two coil sections such that said detecting coil has a high sensitivity with respect to changes in profile of the profiled reaction track (13).

## Revendications

1. Procédé de mesure pour la détermination fiable de la distance entre un rail de réaction (13) conductible et profilé particulièrement dans le sens de la détermination de la distance et une surface fonctionnelle (12) se déplaçant par rapport au rail de réaction, la surface fonctionnelle (12) portant un capteur dans lequel est généré un champ alternatif soumis à une modification en fonction de la distance, cette modification étant saisie sous forme d'information sur la distance dans un transmetteur de signaux logé dans le capteur, de préférence pour déterminer la distance d'un train à lévitation magnétique par rapport à sa voie, **caractérisé en ce que** des informations sur la distance en grande partie découplées sont générées dans deux transmetteurs de signaux logés dans le capteur, ces signaux étant ensuite traités dans des canaux de mesure de distance indépendants l'un de l'autre et acheminés en permanence dans un circuit comparateur (10) qui ne fournit à son tour une information sur la distance que s'il ressort du résultat de la comparaison que les valeurs de distance des canaux de mesure indépendants coïncident dans les limites d'une plage de tolérance sélectionnable au préalable et que deux bobines de mesure (14, 15), placées l'une derrière l'autre verticalement par rapport au rail de réaction (13) et décalées l'une par rapport à l'autre de telle sorte que leur influence mutuelle est minimisée, servent à déterminer les distances.

2. Procédé de mesure selon la revendication 1 **caractérisé en ce que** les transmetteurs de signaux affectés à un canal de mesure respectif sont alimentés par des courants alternatifs de différentes fréquences fixes.

3. Procédé de mesure selon la revendication 1 ou 2 **caractérisé en ce** que le traitement technique des signaux de l'information sur la distance est réalisé via une démodulation synchrone à bande étroite qui génère uniquement la composante réactive d'une tension de mesure pour la détermination de la distance.

4. Procédé de mesure selon la revendication 1, 2 ou 3 **caractérisé en ce que** l'influence et la gamme de fabrication des éléments de circuit sur la tension de mesure de la température est compensée par un champ caractéristique particulier au type.

5. Capteur pour la saisie de paramètres de mouvement d'une surface fonctionnelle portant le capteur par rapport à un rail de profilé avec une bobine de mesure (14, 15) servant à déterminer la distance du rail de réaction (13), ladite bobine de mesure étant alimentée par un générateur de courant alternatif, et un champ alternatif modifié par le rail de réaction (13) en fonction de la distance par rapport à ce rail étant généré dans celle-ci **caractérisé en ce** que le capteur possède deux bobines de mesure (14, 15) servant à déterminer la distance, lesdites bobines étant placées l'une derrière l'autre verticalement par rapport au rail de réaction (13) et décalées l'une par rapport à l'autre de telle sorte que leur influence mutuelle est minimisée et que les bobines de mesure servant à déterminer la distance présentent d'une part des premières sections de piste conductrice (14.1, 15.1) se déployant essentiellement longitudinalement par rapport au profilage (13.1, 1.2) et d'autre part des deuxièmes sections de piste conductrice (14.2, 15.2) se déployant essentiellement transversalement par rapport au profilage (13.1, 1.2), les premières et deuxièmes sections de piste conductrice ne se trouvant pas dans un plan commun de sorte qu'il y a un déport en hauteur entre les premières et les deuxièmes sections de piste conductrice verticalement par rapport au rail de réaction (13).

6. Capteur selon la revendication 5 **caractérisé en ce** que les deuxièmes sections de piste conductrice (14.2, 15.2) se déployant essentiellement transversalement par rapport au profilage (13.1, 1.2) se trouvent entre le rail de réaction (13) et les premières sections de piste conductrice (14.1, 15.1) se déployant essentiellement longitudinalement par rapport au profilage (13.1, 1.2).

7. Capteur selon la revendication 5 ou 6 **caractérisé en ce** que les deuxièmes sections de piste conductrice (14.2, 15.2) d'une part et les premières sections de piste conductrice (14.1, 15.1) d'autre part sont situées avec les conducteurs de liaison (14.3, 15.3) dans des plans angulaires l'un par rapport à l'autre.

8. Capteur selon la revendication 5, 6 ou 7 **caractérisé en ce** que les deuxièmes sections de piste conductrice (14.2, 15.2) se déployant essentiellement transversalement par rapport au profilage (13.1, 1.2) s'étendent sur la période correspondant à la modification périodique du profil du rail de réaction (13).

9. Capteur selon la revendication 5 **caractérisé en ce que** les bobines de mesure (14, 15) sont décalées géométriquement d'environ le quart de leur longueur.

10. Capteur selon l'une des revendications précédentes **caractérisé en ce** qu'une bobine de mesure (17) pour la détermination de la vitesse de la surface fonctionnelle (12) par rapport au rail de réaction (13) est installée dans ce capteur.

11. Capteur selon la revendication 10 **caractérisé en ce** que la bobine de mesure (17) pour la détermination de la vitesse se trouve sur la face de la/des bobine(s) de mesure de distance (14, 15) opposé au rail de réaction (13).

12. Capteur selon la revendication 10 et 11 **caractérisé en ce** que la bobine de mesure (17) pour la détermination de la vitesse est divisée en deux bobines partielles de manière à obtenir une sensibilité élevée pour la modification du profil du rail de réaction profilé (13).
